# EUROPÄISCHE PATENTSCHRIFT

(11) **EP 2 492 790 B1**
(45) Veröffentlichungstag und Bekanntmachung des Hinweises auf die Patenterteilung: **08.04.2020**
(21) Anmeldenummer: 12000937.8
(22) Anmeldetag: 14.02.2012
(51) Int. Cl.: G06F 3/0488, G06F 3/0482, G06F 3/041, G06F 3/042, G06F 3/043, G06F 3/0481

(54) **Bedienvorrichtung für eine Produktverarbeitungsvorrichtung**
Operating device for a product processing device
Dispositif de commande pour un dispositif de traitement de produits

(30) Priorität: 22.02.2011 DE 102011011982
(43) Veröffentlichungstag der Anmeldung: 29.08.2012
(73) Patentinhaber: Bizerba SE & Co. KG, 72336 Balingen (DE)
(72) Erfinder: Steinhilber, Ralf, 72336 Balingen (DE)
(74) Vertreter: Huber, Meik

(56) Entgegenhaltungen:
- DE-A1- 10 161 924
- DE-A1- 19 901 481
- JP-A- 2005 242 501
- US-A1- 2009 085 894

## Beschreibung

Die Erfindung betrifft eine Bedienvorrichtung für eine Produktverarbeitungsvorrichtung der im Oberbegriff des Patentanspruchs 1 genannten Art.

Solche Bedienvorrichtungen sind beispielsweise aus der DE 101 61 924 A1 bekannt. Sie zeigt ein Verfahren zur Zweihandbedienung einer flächigen Anzeige- und Bedieneinheit. Bei dem dort gezeigten Verfahren wird die Lage zumindest eines virtuellen Aktivitätsbereiches auf der Anzeige- und Bedieneinheit definiert und diesem zumindest eine Auslösehandlung zugeordnet.

Das dort gezeigte Verfahren zur Zweihandbedienung ist sehr aufwändig.

Die JP 2005 242501 A zeigt ein Terminalgehäuse in dem eine Glasscheibe eines Displays derart eingeklebt ist, dass das Klebematerial die unterschiedliche thermische Ausdehnung der Gehäuseteile aufnimmt.

Die US2009/085894 A1 zeigt einen Touch-Screen mit einem Nanostrukturfilm, welcher dazu ausgebildet ist, gleichzeitige Mehrfachberührungen zu erkennen und auszuwerten. Der Touch-Screen umfasst eine Abtastschicht, eine Verbindungsschicht und eine Abschirmschicht. Mindestens zwei dieser Schichten sind aus einem gemeinsamen Substrat ausgebildet.

Die DE 199 01481 A1 zeigt einen Touch-Screen als Eingabevorrichtung mit einem Sensorfeld. Auf dem Bildschirm werden Echtzeit Zeigeelemente dargestellt. Ein Verfahren zur Darstellung von aktivierbaren Aktionsfeldern ermöglicht eine besonders intuitive und ergonomische Bedienung und Überwachung von Prozessen einer großindustriellen Anlage.

Die DE 20 2008 000 261 U1 zeigt ein Mehrfachberührungs-Datenfusionssystem. Hierbei wird eine mehrfachberührungsempfindliche Eingabevorrichtung mit einer weiteren Eingabevorrichtung verknüpft, um die Effizienz und Leistungsfähigkeit von Eingabeoperationen zu erhöhen. Die weitere Eingabevorrichtung kann beispielsweise eine Kamera oder ein Beschleunigungssensor sein.

Aus Sicherheitsgründen ist bei technischen Einrichtungen häufig notwendig, dass bestimmte Aktionen erst dann ausgelöst werden, wenn eine vorangegangene Bedienhandlung von einer Person unter Einsatz an beiden Händen vorgenommen worden ist. Mit einer solchen Zweihandbedienung kann zum Beispiel bei großen Bearbeitungsmaschinen ein Schutz der sie bedienenden Person ermöglicht werden, indem sichergestellt ist, dass vor dem Ausführen einer bestimmten Funktion die Bedienperson einen möglichen Gefahrenbereich der technischen Einrichtung verlassen hat. Durch die Zweihandbedienung kann auch das voreilige Auslösen einer Funktion erschwert werden.

Aufgabe der Erfindung ist es eine kostengünstige und benutzerfreundliche Bedienvorrichtung zu schaffen, die auch für sicherheitsrelevante Vorrichtungen einsetzbar ist. Insbesondere soll die Bedienvorrichtung auch in rauen Umgebungsbedingungen eingesetzt werden können und beispielsweise beständig gegen Chemikalien oder Wasser sein.

Diese Aufgabe wird erfindungsgemäß durch eine Bedienvorrichtung gemäß Patentanspruch 1 gelöst.

Es ist vorgesehen, dass die Bedienvorrichtung ein Steuergerät aufweist, über das ein Menü mit verschiedenen Menüfeldern zur Steuerung einer Funktion der Produktverarbeitungsvorrichtung auf dem Touch-Screen darstellbar und über den Touch-Screen erfolgende Eingaben verarbeitbar sind. Über das Steuergerät werden in Abhängigkeit von einem Zustand der Produktverarbeitungsvorrichtung für eine sicherheitsrelevante Zweihandbedienung auf dem Touch-Screen zwei zueinander beabstandete, vorzugsweise mindestens 15 cm voneinander beanstandete, Menüfelder dargestellt, und es wird eine Betätigung dieser Menüfelder, insbesondere die Gleichzeitigkeit und die Dauer der Betätigung, über das Steuergerät erfasst. Abhängig von der Gleichzeitigkeit und Dauer der Bedienung der beiden Menüfelder kann das Steuergerät eine sicherheitsrelevante Funktion einer angeschlossenen Produktionsanlage oder Maschine, beispielsweise einen Fleischwolf oder eine Schneidevorrichtung starten.

Um einen Benutzer vor gefährlichen Fehlbedienungen zu schützen, ist an gefahrgeneigten Produktverarbeitungsvorrichtungen, wie zum Beispiel einer Werkzeugmaschine oder an einem Sortierband, häufig eine Zweihandbedienung vorgesehen, damit beide Hände außerhalb des Gefahrenbereichs an der Bedienvorrichtung sind und nicht eine Hand versehentlich in die Produktverarbeitungsvorrichtung gelangen kann. Bei bekannten Maschinen ist bislang die Lösung, dass zwei diskrete Schalter verwendet werden. Diese sind jedoch relativ teuer und oft anfällig gegen Chemikalien. Zudem können solche Schalter einfach manipuliert werden.

Erfindungsgemäß wird die Zweihandbedienung sichergestellt, indem der Benutzer die beiden Menüfelder gleichzeitig berühren muss. Besonders vorteilhaft ist ein Abstand von mindestens 15 cm, da so verhindert wird dass der Benutzer beide Menüfelder einer Hand berühren kann. Zusätzlich erfasst das Steuergerät vorzugsweise, ob die beiden Menüfelder gleichzeitig berührt werden und wie lange sie berührt werden. Hierdurch kann beispielsweise sichergestellt werden, dass eine Funktion der Produktverarbeitungsvorrichtung erst nach einem vor einstellbaren Zeitraum, während dem beide Menüfelder berührt sein müssen, ausgeführt wird. Dadurch kann insbesondere eine unbeabsichtigte Fehlbedienung vermieden werden.

Der Zustand der Produktverarbeitungsvorrichtung, in dessen Abhängigkeit die Menüfelder dargestellt werden, kann beispielsweise die Position einer Sicherheitshaube oder sonstige Fehlermeldungen sein.

Eine komfortable Bedienung kann erreicht werden, indem das Steuergerät in Fehlerfall einen Hilfetext anzeigt. Ist beispielsweise der Zustand der Produktverarbeitungsvorrichtung, der für die Zweihandbedienung vorgesehen ist, nicht erreicht, weil beispielsweise eine Schutzhaube nicht geschlossen ist, kann ein Hilfetext, beispielsweise "Haube schließen" oder "Verpackungsmaschine einschalten", angezeigt werden.

Um dem Benutzer für eine komfortable Bedienung zu signalisieren wie lange er noch die Menüfelder berühren muss, zeigt das Steuergerät ein mit der Dauer der Berührung kleiner werdender Balken oder eine sich verringernde Anzahl von Sekunden an.

Um eine Bedienvorrichtung in besonders rauen Umgebungsbedingungen eingesetzt werden kann und beispielsweise beständig gegen Chemikalien oder Wasser ist, ist in einer Ausführung vorgesehen, dass der Touch-Screen eine Scheibe aufweist, die eine in dem Terminalgehäuse vorgesehene Öffnung wasserdicht abschließt. Damit kann die erfindungsgemäße Bedienvorrichtung auch in feuchten Umgebungen eingesetzt werden, wie sie in der Chemie oder Pharmaindustrie oder in der Lebensmittelverarbeitung vorkommen.

Es ist insbesondere vorgesehen, dass die Bedienvorrichtung auch mit Wasser oder Chemikalien unter Hochdruck gereinigt werden kann. Die erfindungsgemäße Bedienvorrichtung weist eine sehr hohe Dichtigkeit und Robustheit auf. Es können je nach Art des Touch-Screens bestimmte Schutzarten erreicht werden. So kann beispielsweise bei der Verwendung eines Touch-Screen mit einer Glasoberfläche die Schutzart IP67 erreicht werden. Es handelt sich hierbei um eine internationale Klassifizierung, wobei die Kennbuchstaben IP den Schutz gegen Berühren und gegen Eindringen von Fremdkörpern und von Wasser kennzeichnen. Die erste Kennziffer 6 steht für vollständigen Schutz gegen Berührung und gegen Eindringen von Staub. Die zweite Kennziffer 7 steht für Schutz gegen Wasser in einer Tiefe von 1 m über einen Zeitraum von 30 Minuten.

Die Produktverarbeitungsvorrichtung kann zum Beispiel eine Kontrollwaage, ein Sortierband, eine Dosiereinrichtung oder ein Checkweigher sein. Alternativ kann die Produktverarbeitungsvorrichtung auch eine gegen Verletzungen, die aufgrund von Fehlbedienungen auftreten können, zu sichernde Maschine sein, beispielsweise eine Schneidemaschine, ein Slicer, eine Presse oder ein Fleischwolf.

Es ist auch vorgesehen, dass die Scheibe mit dem Terminalgehäuse über eine Dichtung verbunden ist, da so eine verbesserte Dichtigkeit erreicht werden kann.

In einer bevorzugten Weiterbildung der Erfindung ist die Scheibe mit dem Terminalgehäuse verklebt, da so eine dauerhafte Dichtigkeit, die gleichzeitig günstig in der Herstellung ist, erreicht werden kann.

Von Vorteil ist auch, wenn der Touch-Screen über ein Auflager spannungsfrei in dem Terminalgehäuse gelagert ist, da so verhindert werden kann, dass sich Verformungen des Terminalgehäuses auf den Touch-Screen übertragen. Ohne die spannungsfreie Lagerung könnte der Touch-Screen Spannungsrisse bekommen und beschädigt werden.

Vorteilhaft ist wenn der Touch-Screen als projected capacitve System mit einer Glasoberfläche, die vorzugsweise eine Dicke von 0,2-0,5 mm aufweist, ausgebildet ist. Gängige kapazitive Touch-Screens sind nur mit leitenden Gegenständen bedienbar und in Feuchträumen nur bedingt einsetzbar.

Projected capacitve Systeme ermöglichen eine Erkennung auch mehrerer Finger auch durch größere Glasdicken, sind auch mit dünnen Handschuhen bedienbar und weniger abstandsabhängig. Größere Glasdicken ermöglichen zudem stabilere Displays, die gegen mechanische Beanspruchungen widerstandsfähiger sind.

Erfindungsgemäß auch vorgesehen, dass der Touch-Screen als optisches System ausgebildet ist. Hierbei sind in einem Rahmen des Touch-Screens Infrarotdioden und, vorzugsweise in den oberen Ecken, Kameras angeordnet. Die Vorteile eines optischen Systems sind die Beständigkeit gegen Reinigungsmittel, insbesondere Chemikalien, und eine Bedienbarkeit ohne Kraftaufwand mit einem Finger oder einem beliebigen Gegenstand.

Weitere Vorteile, Merkmale und Einzelheiten der Erfindung ergeben sich aus der nachfolgenden Beschreibung bevorzugter Ausführungsbeispiele sowie anhand der Zeichnungen.

Dabei zeigen:
Fig. 1: Eine Bedienvorrichtung für eine Produktverarbeitungsvorrichtung,
Fig. 2: Eine Schnittdarstellung der Bedienvorrichtung,
Fig. 3: Einen Touch-Screen als resitives System mit einer Glasoberfläche,
Fig. 4: Einen Touch-Screen als projected capacitive System mit einer Glasoberfläche,
Fig. 5: Einen Touch-Screen als optisches System und
Fig. 6: Einen Touch-Screen als akustisches System.

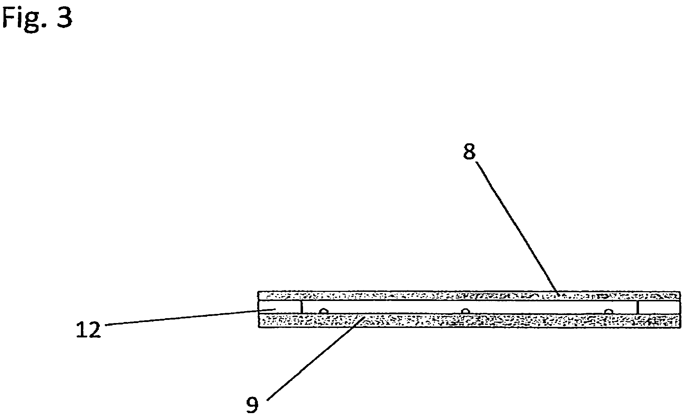

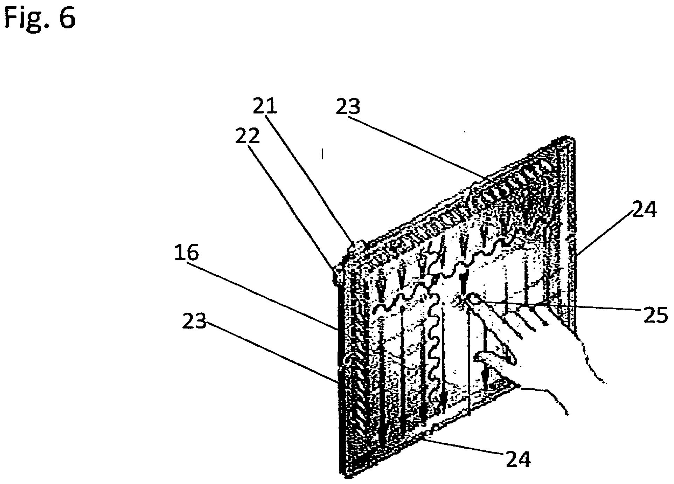

Die Ausführungsbeispiele von Figur 3 und Figur 6 fallen nicht unter den beanspruchten Schutzumfang.

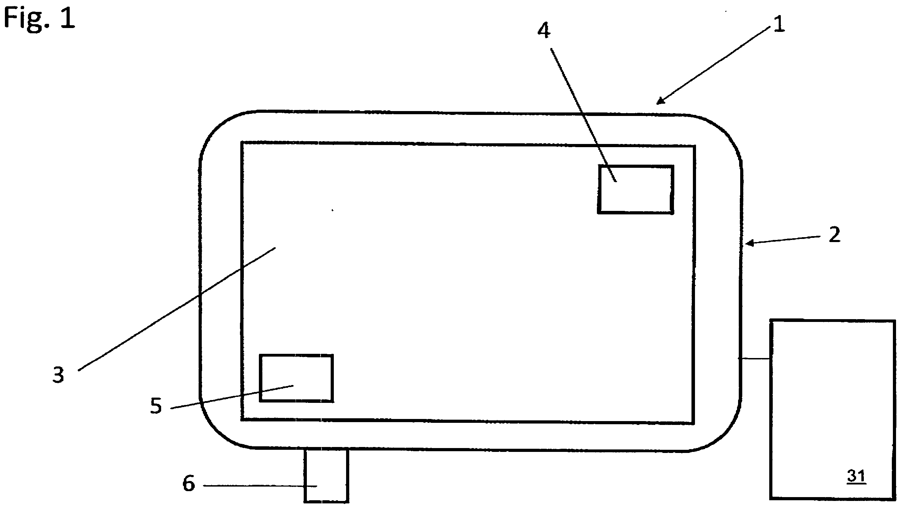

**Figur 1** zeigt eine Bedienvorrichtung 1 mit einem Terminalgehäuse 2, dass eine Öffnung aufweist, in der ein Touch-Screen 3 angeordnet ist. Ein Steuergerät 31 ist mit dem TouchScreen zum Steuern der Anzeige und/oder der Bedienoberfläche verbunden. Das Steuergerät 31 kann innerhalb des Gehäuses des TouchScreens angeordent sein, oder in einer alternativen Ausgestaltung entfernt von diesem in einem separaten Gehäuse angeordnet sein. Auf dem Touch-Screen 3 sind zwei Menüfelder 4, 5 dargestellt, über die eine so genannte Zweihandbedienung realisiert wird. Bei der Zweihandbedienung wird eine Funktion einer hier nicht dargestellten Produktverarbeitungsvorrichtung erst ausgelöst, sobald beide Hände eines Benutzers die Menüfelder 4, 5 gleichzeitig berühren. So wird verhindert, dass Verletzungen dadurch entstehen, dass die Produktverarbeitungsvorrichtung in Betrieb genommen wird, obwohl sich noch Körperteile des Benutzers im Gefahrenbereich befinden.

Neben der hier dargestellten Zweihandbedienung können über den Touch-Screen 3 auch andere Funktionen realisiert werden. So können zum Beispiel Menüs in Form von Listen dargestellt werden, durch die dann mit einer Berührung und gleichzeitigen Bewegung über den Touch-Screen 3 geblättert oder gescrollt werden kann. Die Menüs oder Befehle können auch durch Icons dargestellt werden, wobei durch Antippen eine bestimmte Funktion ausgelöst werden kann. Durch das gleichzeitige Berühren mit zwei Fingern kann eine sogenannte Multi-Touch-Bedienung erfolgen. Bestimmten Fingerbewegungen können so vorbestimmbare Befehle zugeordnet werden. Beispielsweise kann durch Auseinanderziehen mit zwei Fingern ein Bild oder eine Karte vergrößert werden oder durch eine Drehbewegung ein Bild gedreht werden. Durch eine solche Zwei- oder Mehr-Fingerbedienung wird eine schnelle Dateneingabe oder Menusteuerung ermöglicht, da beispielsweise gleichzeitig zwei Parameter oder Menupunkte wählbar bzw. eingebbar sind.

Das Terminalgehäuse 2 weist einen Anschluss 6 mit einem wasserdichten Panzergewinde auf. Über diesen Anschluss 6 ist die Bedienvorrichtung 1 mit der Produktionsverarbeitungsvorrichtung verbunden.

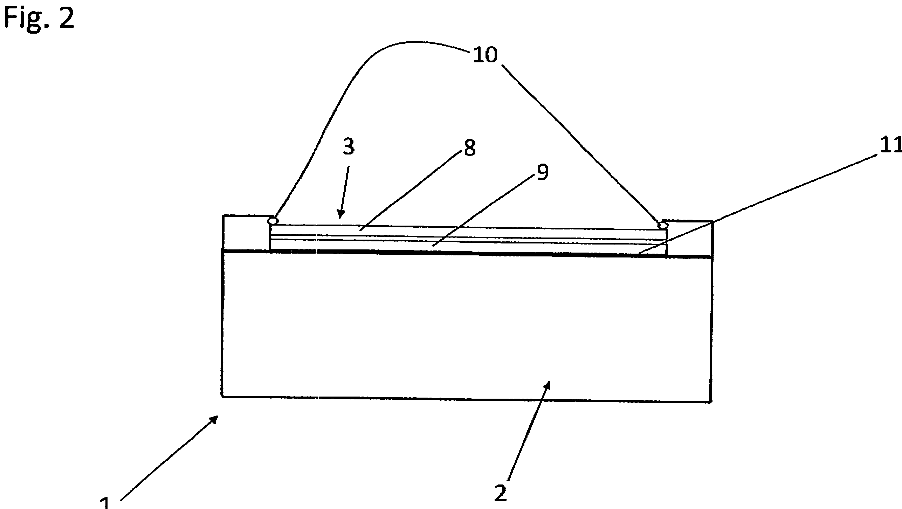

**Figur 2** zeigt eine Schnittdarstellung der Bedienvorrichtung 1. Das Terminalgehäuse 2 weist eine Öffnung 7, in der der Touch-Screen 3 angeordnet ist, auf. Der Touch-Screen 3 umfasst ein Top-Glas 8 und ein Bottom-Glas 9. Zwischen dem Top-Glas 8 und dem Terminalgehäuse 2 ist eine umlaufende Dichtung 10 angeordnet. Diese Dichtung 10 schützt vor Eindringen von Flüssigkeiten in das Terminalgehäuse 2. Das Terminalgehäuse 2 kann so einfach mit Chemikalien oder Hochdruck gereinigt werden, ohne dass innerhalb des Terminalgehäuses 2 angeordnete Bauteile beschädigt werden. Gleichzeitig ist das Top-Glas 8 kratzunempfindlich und resistent gegenüber Chemikalien. Der Touch-Screen 3 ist in dem Terminalgehäuse 2 durch ein Auflager 11 spannungsfrei gelagert. Durch diese Lagerung wird verhindert, dass Verformungen des Terminalgehäuses 2 auf dem Touch-Screen 3 übertragen werden, da hierdurch Spannungsrisse entstehen können.

**Figur 3** zeigt einen Touch-Screen 3 als resitives System mit einer Glasoberfläche. Das Top-Glas 8 besteht aus einer ITO-Folie, die mit einem sehr dünnen Glas, das sich durchbiegen lässt, verbunden ist. Das Bottom-Glas 9 ist ebenfalls aus sehr dünnem Glas mit einer ITO-Folie aufgebaut. Für eine besonders stabile Ausführung kann das Bottom Glas 9 alternativ auch aus einer dickeren Glasscheibe, vorzugsweise 3mm bis 5mm dick, bestehen. Zwischen dem Top-Glas 8 und dem Bottom-Glas 9 ist ein Verbindungselement 12 angeordnet. Wird auf das resistive System Druck, beispielsweise mit einem Finger oder einer Spitze eines Stifts, ausgeübt, werden die beiden ITO-Folien stellenweise miteinander verbunden und durch Messung des elektrischen Widerstandes kann die Position der Druckstelle ermittelt werden.

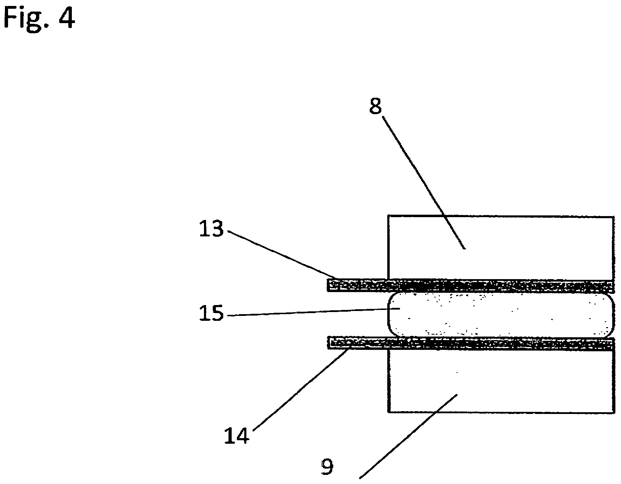

**Figur 4** zeigt einen Touch-Screen 3 als projected capacitive System mit einer Glasoberfläche. Zwischen dem Top-Glas 8 und dem Bottom-Glas 9 ist ein Sensorenraster aus zwei mikrofeinen Drahtschichten 13, 14 und einem Verbindungselement 15 angeordnet. Bei einer Berührung entsteht zwischen dem Finger und dem Sensorenraster elektrische Kapazität. Hierdurch kann die Position der Berührstelle ermittelt werden. Das projected capacitive System ermöglicht eine Erkennung auch durch größere Glasdicken und ist auch mit dünnen Handschuhen bedienbar. Zusätzlich ist die Erkennung mehrerer Finger möglich und das System ist weniger abstandsabhängig.

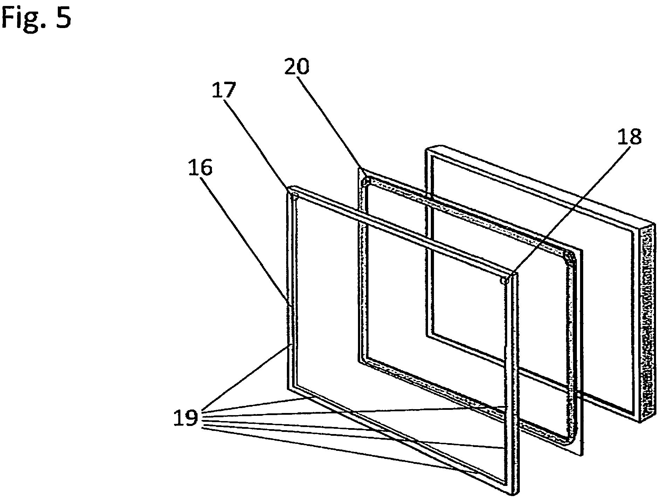

**Fig. 5** zeigt einen Touch-Screen 3 als optisches System. In einem Rahmen 16 sind in den oberen Ecken zwei Kameras 17, 18, die von im Rahmen angeordneten Infrarotdioden 19 ausgestrahltes Licht registrieren, angeordnet. Von den Infrarotdioden 19 sind in der Figur nur einige beispielhaft dargestellt. Bei einer Berührung einer Glasscheibe 20 wird das von den Infrarotdioden 19 ausgestrahlte Licht teilweise unterbrochen. Hierdurch können die Position des Fingers oder des Gegenstandes, der den Lichtstrahl unterbricht, berechnet werden. Diese Variante ist sehr unempfindlich, beständig gegen Chemikalien und bedienbar mit allen Gegenständen wobei kein Kraftaufwand nötig ist.

**Fig. 6** zeigt einen Touch-Screen 3 als akustisches System. Bei dem akustischen System sind in mindestens einer Ecke des Rahmens 16 Ultraschallsignalgeber 21, 22 angeordnet. An den Kanten sind Schallreflektoren 23 und Schallsensoren 24 angeordnet. Über Messungen beispielsweise der Laufzeit und Amplitude des bei den Schallsensoren ankommenden Ultraschalls kann die Position eines Fingers 25, der den Touch-Screen 3 berührt, ermittelt werden.

Akustische Systeme sind sehr unempfindlich, beständig gegen Chemikalien und bedienbar mit allen weichen Gegenständen wobei kein Kraftaufwand nötig ist.

### Bezugszeichenliste

- 1: Bedienvorrichtung
- 2: Terminalgehäuse
- 3: Touch-Screen
- 4: Menüfelder
- 5: Menüfelder
- 6: PG Anschluss
- 7: Öffnung
- 8: Top-Glas
- 9: Bottom-Glas
- 10: Dichtung
- 11: Auflager
- 12: Verbindungselement
- 13: Drahtschicht
- 14: Drahtschicht
- 15: Verbindungselement
- 16: Rahmen
- 17: Kamera
- 18: Kamera
- 19: Infrarotdiode
- 20: Glasscheibe
- 21: Ultraschallsignalgeber
- 22: Ultraschallsignalgeber
- 23: Schallreflektoren
- 24: Schallsensoren
- 25: Finger
- 31: Steuergerät

## Patentansprüche

1. Bedienvorrichtung (1) für eine Produktverarbeitungsvorrichtung, wobei die Bedienvorrichtung (1) ein Terminalgehäuse (2), einen Touch-Screen (3) und ein Steuergerät (31) aufweist, und mit dem Steuergerät, über das ein Menü mit verschiedenen Menüfeldern (4, 5) zur Steuerung einer Funktion der Produktverarbeitungsvorrichtung auf dem Touch-Screen (3) darstellbar und über den Touch-Screen (3) erfolgende Eingaben verarbeitbar sind, wobei über das Steuergerät in Abhängigkeit von einem Zustand der Produktverarbeitungsvorrichtung für eine sicherheitsrelevante Zweihandbedienung auf dem Touch-Screen (3) zwei voneinander beabstandete Menüfelder (4, 5) darstellbar sind und die Gleichzeitigkeit und Dauer einer Betätigung dieser Menüfelder (4, 5) über das Steuergerät erfassbar ist und das Steuergerät abhängig von der Gleichzeitigkeit und Dauer der Betätigung eine bestimmte sicherheitsrelevante Funktion der Produktverarbeitungsvorrichtung steuert, wobei das Steuergerät eine verbleibende Dauer der Betätigung der Menüfelder (4, 5) zur Steuerung einer bestimmten sicherheitsrelevanten Funktion der Produktverarbeitungsvorrichtung über einen mit Dauer der Berührung kleiner werdenden Balken oder eine sich verringernde Anzahl von Sekunden auf dem Touch-Screen (3) anzeigt, und wobei der Touch-Screen (3) als optisches System oder als projected capacitive System mit einer Glasoberfläche (8), die vorzugsweise eine Dicke von 0,2 - 0,5 mm aufweist, ausgebildet ist.

2. Bedienvorrichtung nach Anspruch 1, wobei das Steuergerät die für eine sicherheitsrelevante Zweihandbedienung auf dem Touch-Screen (3) dargestellten zwei Menüfelder (4, 5) mindestens 15 cm voneinander beabstandet darstellt.

3. Bedienvorrichtung nach Anspruch 1 oder 2, wobei der Touch-Screen (3) eine Scheibe (8) aufweist, die eine in dem Terminalgehäuse (2) vorgesehene Öffnung wasserdicht abschließt.

4. Bedienvorrichtung nach Anspruch 3,
wobei die Scheibe (8) mit dem Terminalgehäuse (2) über eine Dichtung (10) verbunden ist.

5. Bedienvorrichtung nach Anspruch 3,
wobei die Scheibe (8) mit dem Terminalgehäuse (2) verklebt ist.

6. Bedienvorrichtung nach einem der vorhergehenden Ansprüche,
wobei der Touch-Screen (3) über ein Auflager (11) spannungsfrei in dem Terminalgehäuse (2) gelagert ist.

## Claims

1. Operating device (1) for a product processing device, wherein the operating device (1) has a terminal housing (2), a touchscreen (3) and a controller (31),
and with the controller, by means of which a menu having various menu fields (4, 5) for controlling a function of the product processing device is presentable on the touchscreen (3) and inputs made via the touchscreen (3) are processible,
wherein
the controller can be used, on the basis of a state of the product processing device, to present two spaced-apart menu fields (4, 5) on the touchscreen (3) for safety-relevant two-handed operation, and the simultaneousness and duration of operation of these menu fields (4, 5) is detectable by means of the controller, and the controller takes the simultaneousness and duration of the operation as a basis for controlling a specific safety-relevant function of the product processing device, wherein the controller displays a remaining duration of the operation of the menu fields (4, 5) for controlling a specific safety-relevant function of the product processing device by means of a bar that becomes smaller as the touch goes on or a decreasing number of seconds on the touchscreen (3), and wherein
the touchscreen (3) is in the form of an optical system or in the form of a projected capacitive system having a glass surface (8) that preferably has a thickness of 0.2 - 0.5 mm.

2. Operating device according to Claim 1,
wherein
the controller presents the two menu fields (4, 5) presented on the touchscreen (3) for safety-relevant two-handed operation at a spacing of at least 15 cm apart.

3. Operating device according to Claim 1 or 2,
wherein
the touchscreen (3) has a pane (8) that provides a watertight seal for an opening provided in the terminal housing (2).

4. Operating device according to Claim 3,
wherein
the pane (8) is connected to the terminal housing (2) by means of a seal (10).

5. Operating device according to Claim 3,
wherein
the pane (8) is adhesively bonded to the terminal housing (2).

6. Operating device according to one of the preceding claims,
wherein
the touchscreen (3) is mounted in the terminal housing (2) without tension by means of a bearing (11).

## Revendications

1. Dispositif de commande (1) pour un dispositif de traitement de produits, dans lequel le dispositif de commande (1) comporte un boîtier de terminal (2), un écran tactile (3) et un appareil de commande (31), et avec l'appareil de commande, au moyen duquel un menu comportant différents champs de menu (4, 5) pour la commande d'une fonction du dispositif de traitement de produits peut être affiché sur l'écran tactile (3) et des entrées effectuées par l'intermédiaire de l'écran tactile (3) peuvent être traitées,
dans lequel deux champs de menu espacés l'un de l'autre (4, 5) peuvent être affichés sur l'écran tactile (3) par l'intermédiaire de l'appareil de commande en fonction d'un état du dispositif de traitement de produits pour une commande à deux mains importante pour la sécurité, et la simultanéité et la durée d'un actionnement desdits champs de menu (4, 5) peuvent être détectées par l'intermédiaire de l'appareil de commande, et l'appareil de commande commande une fonction déterminée du dispositif de traitement de produits, qui est importante pour la sécurité, en fonction de la simultanéité et de la durée de l'actionnement, dans lequel l'appareil de commande affiche sur l'écran tactile (3) une durée d'actionnement restante des champs de menu (4, 5) pour la commande d'une fonction déterminée du dispositif de traitement de produits, qui est importante pour la sécurité, au moyen d'une barre qui diminue avec la durée de l'actionnement ou d'un nombre de secondes décroissant, et dans lequel
l'écran tactile (3) est réalisé sous la forme d'un système optique ou d'un système capacitif projeté présentant une surface en verre (8), qui a de préférence une épaisseur de 0,2 à 0,5 mm.

2. Dispositif de commande selon la revendication 1, dans lequel
l'appareil de commande affiche les deux champs de menu (4, 5) représentés sur l'écran tactile (3) à une distance d'au moins 15 cm l'un de l'autre pour une utilisation à deux mains importante pour la sécurité.

3. Dispositif de commande selon la revendication 1 ou 2, dans lequel
l'écran tactile (3) présente une vitre (8) qui ferme de manière étanche à l'eau une ouverture prévue dans le boîtier de terminal (2).

4. Dispositif de commande selon la revendication 3, dans lequel
la vitre (8) est reliée au boîtier de terminal (2) par l'intermédiaire d'un joint d'étanchéité (10).

5. Dispositif de commande selon la revendication 3, dans lequel
la vitre (8) est collée au boîtier de terminal (2).

6. Dispositif de commande selon l'une des revendications précédentes, dans lequel
l'écran tactile (3) est monté sans tension dans le boîtier de terminal (2) par l'intermédiaire d'un support (11) .
